# EUROPEAN PATENT SPECIFICATION

(11) **EP 4 113 707 B1**
(45) Date of publication and mention of the grant of the patent: **18.03.2026**
(21) Application number: 21898319.5
(22) Date of filing: 29.09.2021
(51) Int. Cl.: H01M 50/105, B29C 59/02, B29C 43/36, B21D 22/04, B29C 43/02, H01M 10/04, H01M 50/119, B21D 22/02, B21D 22/20, B21D 35/00, B21D 53/00, B21D 22/22, B29K 705/02, B29L 31/00

(54) **MANUFACTURING METHOD OF BATTERY CELL AND POUCH FORMING APPARATUS**
VERFAHREN ZUR HERSTELLUNG EINER BATTERIECELLE UND VORRICHTUNG ZUR HERSTELLUNG VON POUCH-ZELLEN
PROCÉDÉ DE FABRICATION D'ÉLÉMENT DE BATTERIE ET APPAREIL DE FORMATION DE CELLULE D'ACCUMULATEUR À POCHE

(30) Priority: 26.11.2020 KR 20200161173
(43) Date of publication of application: 04.01.2023
(73) Proprietor: LG Energy Solution, Ltd., Seoul 07335 (KR)
(72) Inventor: PARK, Sung Chul, Daejeon 34122 (KR); JANG, Eung Jin, Daejeon 34122 (KR); PARK, Sin Young, Daejeon 34122 (KR); PARK, Dong Hyeuk, Daejeon 34122 (KR)
(74) Representative: Goddar, Heinz J.
(86) International application number: PCT/KR2021/013331
(87) International publication number: WO 2022/114492

(56) References cited:
- DE-C- 530 131
- JP-A- 2005 108 747
- JP-A- 2019 185 978
- KR-A- 20060 087 185
- KR-A- 20110 041 071
- KR-A- 20190 038 094
- KR-A- 20190 038 094
- US-A1- 2017 166 373
- US-A1- 2020 282 627

## Description

### [TECHNICAL FIELD]

The present disclosure relates to a manufacturing method of a battery cell and a pouch forming apparatus, and more particularly, to a manufacturing method of a battery cell having improved vision recognition rate and a pouch forming apparatus.

### [BACKGROUND]

As the demands for portable electronic products such as notebooks, video cameras and cellular phones are rapidly increased in these days, and development of electric vehicles, energy storage batteries, robots, satellites, etc. is under active progress, numerous studies are being made on secondary batteries being used as the driving power source.

The electrode assembly mounted in the battery case is a power generating element, having a cathode/separator/anode stack structure, which can be charged and discharged, and the electrode assembly is classified into a jelly-roll type, a stacked type and a stacked/folded type. The jelly-roll type electrode assembly is configured to have a structure in which a long sheet type cathode and a long sheet type anode, to which active materials are applied, are wound in a state where a separator is interposed between the cathode and the anode, the stacked type electrode assembly is configured to have a structure in which a large number of cathodes having a predetermined size and a large number of anodes having a predetermined size are sequentially stacked in a state in which separators are interposed between the cathodes and the anodes, and the stacked/folded type electrode assembly is a combination of the jelly-roll type electrode assembly and the stacked type electrode assembly. Among them, the jelly-roll type electrode assembly has advantages in that manufacturing is easy and an energy density per unit weight is high.

Meanwhile, based on the shape of a battery case, a secondary battery is classified into a cylindrical battery where an electrode assembly is built into a cylindrical metal can, a prismatic battery where an electrode assembly is built into a prismatic metal can, and a pouch-type battery where an electrode assembly is built into a pouch type case formed of an aluminum laminate sheet.

A pouch-type secondary battery includes an electrode assembly in which an electrode and a separator are alternately laminated, and a pouch case for housing the electrode assembly. The method for manufacturing the secondary battery includes an electrode production step of producing an electrode, an electrode assembly production step of alternately laminating electrodes and a separator to produce an electrode assembly, an electrode lead coupling step of coupling electrode lead to the electrode assembly, and a pouch sealing step of housing the electrode assembly in a pouch case in a state where the tip of the electrode lead is pulled out to the outside, and sealing the edge surface of the pouch case.

Here, the pouch case is manufactured using a pouch forming apparatus, and the pouch forming apparatus includes a die unit in which a pouch film is disposed and a forming groove is formed, and a pressing unit in which the pouch film is inserted into the forming groove in a state where the pouch film disposed on the die unit is pressed, thereby forming an electrode assembly-receiving part. The pressing unit includes a pressing part inserted into the forming groove.

By using such a pouch forming apparatus, a pouch film is arranged on a die unit, and then the surface of the pouch film arranged on the die unit is pressed with the pressing part included in the pressing unit. Then, the pressing part is inserted into the forming groove of the die unit in a state where the pressing part presses the pouch film, whereby an electrode assembly-receiving part having the shape of the forming groove may be formed on the surface of the pouch film.

After that, in order to put the pouch film in a post-process, conventionally, the position could be specified by piercing the end part of the pouch film. However, when holes are formed in the pouch film by a piercing process, there are cases where holes cannot be pierced intermittently, which causes a problem that it becomes necessary to adjust the separate position of the piercing unit when changing the mold of the forming apparatus.

### [Prior Art Literature]

### [Patent Literature]

### Japanese Unexamined Patent Publication No. 2019-185978

KR 2019 0 038 094 A relates to a forming apparatus of a pouch of a secondary battery, which comprises: die; punch; and a straight line part and a corner part, and also comprises a stripper for fixing a pouch film to be placed on the die, wherein the stripper is formed with a protrusion part at a portion contacting with the pouch, and a groove part opposed to the protrusion part is formed on the die. A method of manufacturing a pouch type battery cell by forming an embossed part in a part of a pouch film by using an embossing punch part is known from US 2020/0282627 A1.

### [DETAILED DESCRIPTION OF THE INVENTION]

### [Technical Problem]

It is an object of the present disclosure to provide a manufacturing method of a battery cell having improved vision recognition rate and a pouch forming apparatus.

However, the problem to be solved by embodiments of the present disclosure is not limited to the above-described problems, and can be variously expanded within the scope of the technical idea included in the present disclosure.

### [Technical Solution]

According to an embodiment of the present disclosure, there is provided a method of manufacturing a pouch type battery cell, comprising: forming an embossed part in a part of a pouch film by using an embossing punch part, wherein the embossed part is subjected to a vision recognition step of an inner circular shape and an outer circular shape based on a punched recessed part.

The embossing punch part may be punched along an edge of the embossed part to form a recessed part.

The forming an embossed part may further include forming a pouch film in a state where the embossing punch part and a blank holder are in contact with each other.

The forming an embossed part may further include punching the pouch film by the embossing punch part while the blank holder presses the bottom surface in contact with the embossed part.

The bottom surface of the embossed part may be formed to be flat.

The embossed part may be formed during pouch forming of the pouch type battery cell.

According to an embodiment of the present disclosure, there is provided a pouch forming apparatus for forming a receiving part of the pouch film, the apparatus comprising: an embossing punch part, a die part serving as a passage through which the embossing punch part moves; and a blank holder in contact with the embossing punch part in the die part, wherein the embossing punch part forms an embossed part having a recessed part in the pouch film, and an outer circular shape and an inner circular shape of the embossed part are formed by a recessed part, and wherein the embossed part is configured to be subjected to a vision recognition step of an inner circular shape and an outer circular shape based on the punched recessed part.

The blank holder may press the bottom surface in contact with the embossed part so that the bottom surface of the embossed part is flat.

### [Advantageous Effects]

According to embodiments of the present disclosure, it is possible to improve the vision recognition rate by applying an embossing process.

In addition, the pouch film is formed in a state where the embossing punch part and the blank holder are in contact with each other, so that the bottom surface of the pouch film in contact with the blank holder is flat, and the vision recognition rate can be further improved.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is an exploded perspective view showing a pouch type battery cell;
Fig. 2 is a view showing an embossed part formed by the method of manufacturing a pouch type battery cell according to an embodiment of the present disclosure;
Fig. 3 is a view showing an embossing forming unit according to an embodiment of the present disclosure;
Fig. 4 is a photograph showing an embossed part formed by an embossing process according to a comparative example;
Fig. 5 is a view showing a vision recognition rate of the embossed part of Fig. 4,
Fig. 6 is a photograph showing an embossed part formed by an embossing process according to an embodiment of the present disclosure; and
Fig. 7 is a view showing a vision recognition rate of the embossed part of Fig. 6.

### [DETAILED DESCRIPTION OF THE EMBODIMENTS]

Hereinafter, various embodiments of the present disclosure will be described in detail with reference to the accompanying drawings so that those skilled in the art can easily carry out them.

A description of parts not related to the description will be omitted herein for clarity, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

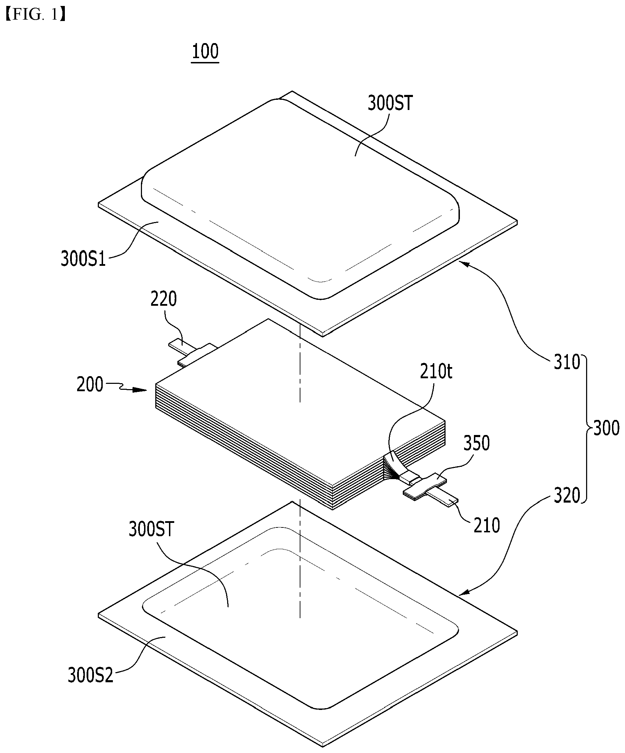

Fig. 1 is an exploded perspective view showing a pouch type battery cell.

Referring to Fig. 1, the pouch type battery cell 100 may be manufactured by housing an electrode assembly 200 inside a cell case 300 and then sealing the case. The electrode assembly 200 may include a positive electrode, a negative electrode, and a separator disposed between the positive electrode and the negative electrode. The electrode assembly 200 may be a stack type electrode assembly, a jelly-roll type electrode assembly, or a stack/folding type electrode assembly.

Each of the positive electrode and the negative electrode includes an electrode tab 210t, and the electrode leads 210 and 220 each connected to the electrode tab 210t may be exposed to the outside of the cell case 300. The electrode tab 210t may be formed by extending a foil of an electrode sheet included in the electrode assembly 200. In addition, the electrode leads 210 and 220 can be located respectively in the sealing part 300S1 and 300S2 in a state of being covered with a lead film 350 so as to secure a sealing property and an insulation property.

The cell case 300 is composed of a laminate sheet, and may include a resin layer for heat fusion and a metal layer for preventing material penetration. The cell case 300 may include an upper case 310 and a lower case 320.

Concave-shaped receiving parts 300ST on which the electrode assembly 200 can be seated may be formed in each of the upper case 310 and the lower case 320. Sealing parts 300S1 and 300S2 can be provided along the outer periphery of the receiving parts 300ST of the upper case 310 and the lower case 320, respectively. The sealing part 300S1 of the upper case 310 and the sealing part 300S2 of the lower case 320 can be heat-fused to each other to form a sealing part and seal the cell case 300.

In another embodiment of the present disclosure, one side of the upper case and one side of the lower case can be integrally connected to each other, and the remaining three sides can be heat-fused. Further, the receiving part 300ST may be formed only in any one of the upper case 310 and the lower case 320, and the other case may have a planar shape.

The cell case 300 described above can include a resin layer, a metal layer, a packaging sheet layer or the like to protect the pouch-type secondary battery. For this purpose, a process of forming a pouch film is required.

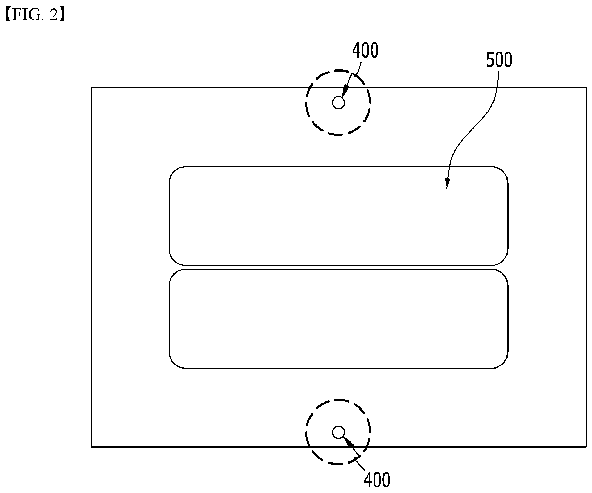

Fig. 2 is a view showing an embossed part formed by the method of manufacturing a pouch type battery cell according to an embodiment of the present disclosure.

By using such a pouch forming apparatus, a pouch film is arranged on a die unit, and then the surface of the pouch film arranged on the die unit is pressed with a pressing part included in the pressing unit. Then, the pressing part is inserted into a forming groove of the die unit in a state where the pressing part presses the pouch film, whereby the electrode assembly-receiving part 500 having the shape of the forming groove may be formed on the surface of the pouch film.

After that, in order to put the pouch film in a post-process, an embossed part 400 is formed at the end part of the pouch film by using an embossing process as shown in Fig. 2. Specifically, the post-process refers to forming a pouch supplied to a roll during the battery packaging process, then placing the electrode assembly in the pouch, subjecting to a sealing process, and allowing the pouch cut into a sheet to be seated on the nest. At this time, the shape of the embossed part 400 may be recognized in order for the pouch to be accurately seated on the nest, and then automatic correction may be performed. The embossed part 400 according to the present embodiment may be formed during pouch forming.

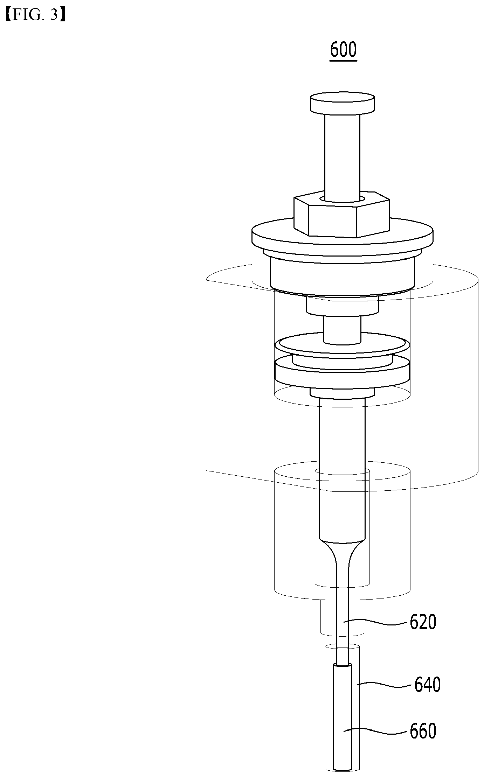

Fig. 3 is a view showing an embossing forming unit according to an embodiment of the present disclosure.

Referring to Fig. 3, in order to form the embossed part according to the present embodiment, the embossing punch unit 600 included in the pouch forming apparatus can be used. The embossing punch unit 600 includes an embossing punch part 620 for forming a recessed part of the embossed part 400 of Fig. 2, a die part 640 that becomes a passage through which the embossing punch part 620 moves to the object, and a blank holder 660 that comes into contact with the embossing punch part 620 within the die part 640. The recessed part according to the present embodiment is a part punched along the edge of the embossed part, and the embossed part has an inner circular shape and an outer circular shape based on the punched recessed part.

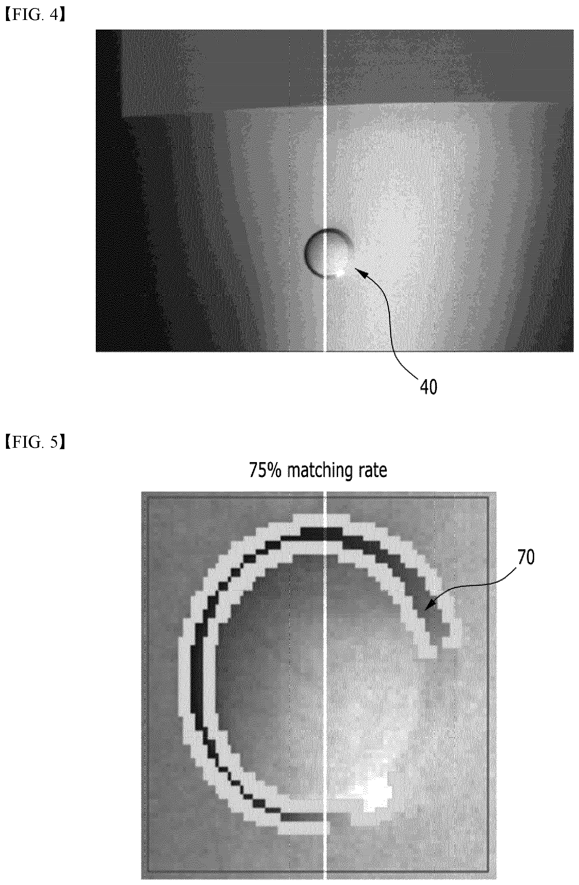

Fig. 4 is a photograph showing an embossed part formed by an embossing process according to a comparative example. Fig. 5 is a view showing a vision recognition rate of the embossed part of Fig. 4. The embossing process according to the comparative example is a case in which the embossed part is formed through the embossing punch part 620 without using the blank holder 660 of Fig. 3.

Referring to Figs. 4 and 5, in the embossed part 40 according to the comparative example, the bottom surface of the pouch film can be stretched and project upward in a convex shape in the process of forming the recessed part 70. When the bottom surface of the pouch film becomes convex upward in this way, a shadow is generated when the embossed part is subjected to vision recognition, and the vision recognition rate is lowered, so that a matching rate with the pre-stored standard may be reduced as shown in Fig. 5.

Further, since the embossing punch part descends from an empty space inside the die part 640 of Fig. 3 to form a recessed part, there is a possibility that the embossing punch part does not come down in a straight manner and is biased to one side. Accordingly, the recessed part may be unclearly formed, and thus the vision recognition rate may be reduced.

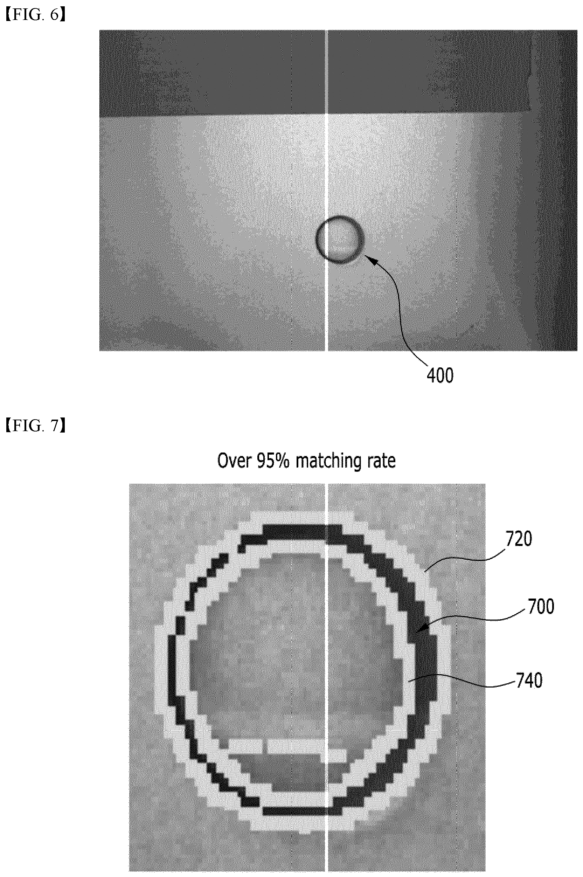

Fig. 6 is a photograph showing an embossed part formed by an embossing process according to an embodiment of the present disclosure. Fig. 7 is a view showing a vision recognition rate of the embossed part of Fig. 6.

Referring to Figs. 6 and 7, the embossed part 400 according to the present embodiment may be in a state where the blank holder presses the bottom surface of the pouch film in the process where the embossing punch part forms the recessed part 700. Further, in the step of forming the embossed part 400, the pouch film may be formed in a state where the embossing punch part and the blanking holder are in contact with each other. In this manner, since the blank holder presses the bottom surface of the embossed part 400 in the process of forming the recessed part 700, it is possible to prevent the bottom surface of the pouch film from being stretched and protruding upward in a convex shape. That is, the bottom surface of the embossed part 400 can be formed to be flat. Therefore, in the embossed part 400 according to the present embodiment, an inner circular shape 740 and an outer circular shape 720 clearly appeared based on the punched recessed part 700. At this time, when the recessed part 700 is subjected to vison inspection, it is clearly recognized, and the matching rate with the pre-stored standard may appear very high.

### [Description of Reference Numerals]

400: embossed part
600: embossing punch unit
620: embossing punch part
640: die part
660: blank holder
700: recessed part

## Claims

1. A method of manufacturing a pouch type battery cell (100), comprising:
forming an embossed part (400) in a part of a pouch film by using an embossing punch part (620), wherein the embossed part (400) is subjected to a vision recognition step of an inner circular shape (740) and an outer circular shape (720) based on a punched recessed part (700).

2. The method of manufacturing a pouch type battery cell (100) according to claim 1, wherein:
the embossing punch part (620) is punched along an edge of the embossed part (400) to form the recessed part (700).

3. The method of manufacturing a pouch type battery cell (100) according to claim 1, wherein:
the forming the embossed part (400) further comprises forming a pouch film in a state where the embossing punch part (620) and a blank holder (660) are in contact with each other.

4. The method of manufacturing a pouch type battery cell (100) according to claim 3, wherein:
the forming the embossed part (400) further comprises punching the pouch film by the embossing punch part (620) while the blank holder (660) presses the bottom surface in contact with the embossed part (400).

5. The method of manufacturing a pouch type battery cell (100) according to claim 4, wherein:
the bottom surface of the embossed part (400) is formed to be flat.

6. The method of manufacturing a pouch type battery cell (100) according to claim 1, wherein:
the embossed part (400) is formed during pouch forming of the pouch type battery cell (100).

7. A pouch forming apparatus for forming a receiving part of the pouch film, the apparatus comprising:
an embossing punch part (620),
a die part (640) serving as a passage through which the embossing punch part (620) moves; and
a blank holder (660) in contact with the embossing punch part (620) in the die part (640),
wherein the embossing punch part (620) forms an embossed part (400) having a recessed part (700) in the pouch film, and
an outer circular shape (720) and an inner circular shape (740) of the embossed part (400) are formed by a recessed part (700), and
wherein the embossed part (400) is configured to be subjected to a vision recognition step of an inner circular shape (740) and an outer circular shape (720) based on the punched recessed part (700).

8. The pouch forming apparatus according to claim 7, wherein:
The blank holder (660) presses a bottom surface in contact with the embossed part (400) so that the bottom surface of the emboss part (400) is flat.

## Patentansprüche

1. Verfahren zum Herstellen einer Batteriezelle (100) vom Beuteltyp, umfassend:
Bilden eines geprägten Teils (400) in einem Teil eines Beutelfilms unter Verwendung eines Prägestanzteils (620), wobei der geprägte Teil (400) einem Sichterkennungsschritt einer inneren kreisförmigen Form (740) und einer äußeren kreisförmigen Form (720) basierend auf einem gestanzten vertieften Teil (700) unterzogen wird.

2. Verfahren zum Herstellen einer Batteriezelle (100) vom Beuteltyp nach Anspruch 1, bei dem:
der Prägestanzteil (620) entlang einer Kante des geprägten Teils (400) gestanzt wird, um den vertieften Teil (700) zu bilden.

3. Verfahren zum Herstellen einer Batteriezelle (100) vom Beuteltyp nach Anspruch 1, bei dem:
das Bilden des geprägten Teils (400) ferner das Bilden eines Beutelfilms in einem Zustand umfasst, in dem der Prägestanzteil (620) und ein Rohlinghalter (660) miteinander in Kontakt sind.

4. Verfahren zum Herstellen einer Batteriezelle (100) vom Beuteltyp nach Anspruch 3, bei dem:
das Bilden des geprägten Teils (400) ferner das Stanzen des Beutelfilms durch den Prägestanzteil (620) umfasst, während der Rohlinghalter (660) die Bodenfläche in Kontakt mit dem geprägten Teil (400) drückt.

5. Verfahren zum Herstellen einer Batteriezelle (100) vom Beuteltyp nach Anspruch 4, bei dem:
die Bodenfläche des geprägten Teils (400) flach ausgebildet ist.

6. Verfahren zum Herstellen einer Batteriezelle (100) vom Beuteltyp nach Anspruch 1, bei dem:
der geprägte Teil (400) während des Beutelformens der Batteriezelle (100) vom Beuteltyp ausgebildet wird.

7. Beutelformungsvorrichtung zum Formen eines Aufnahmeteils des Beutelfilms, wobei die Vorrichtung umfasst:
einen Prägestanzteil (620),
einen Matrizenteil (640), der als ein Durchgang dient, durch den sich der Prägestanzteil (620) bewegt; und
einen Rohlinghalter (660) in Kontakt mit dem Prägestanzteil (620) in dem Matrizenteil (640),
wobei der Prägestanzteil (620) einen geprägten Teil (400) mit einem vertieften Teil (700) in dem Beutelfilm bildet, und
eine äußere kreisförmige Form (720) und eine innere kreisförmige Form (740) des geprägten Teils (400) durch einen vertieften Teil (700) gebildet werden, und
wobei der geprägte Teil (400) konfiguriert ist, um einem Sichterkennungsschritt einer inneren kreisförmigen Form (740) und einer äußeren kreisförmigen Form (720) basierend auf dem gestanzten vertieften Teil (700) unterzogen zu werden.

8. Beutelformungsvorrichtung nach Anspruch 7, bei der:
der Rohlinghalter (660) eine Bodenfläche in Kontakt mit dem geprägten Teil (400) drückt, so dass die Bodenfläche des geprägten Teils (400) flach ist.

## Revendications

1. Procédé de fabrication d'une cellule de batterie de type poche (100), comprenant :
la formation d'une pièce gaufrée (400) dans une partie d'un film de poche à l'aide d'un poinçon de gaufrage (620), la pièce gaufrée (400) étant soumise à une étape de reconnaissance visuelle d'une forme circulaire intérieure (740) et d'une forme circulaire extérieure (720) d'après une pièce gaufrée évidée (700).

2. Procédé de fabrication d'une cellule de batterie de type poche (100) selon la revendication 1,
le poinçon de gaufrage (620) poinçonnant le long d'un bord de la pièce gaufrée (400) pour former la pièce évidée (700).

3. Procédé de fabrication d'une cellule de batterie de type poche (100) selon la revendication 1,
la formation de la pièce gaufrée (400) comprenant en outre la formation d'un film de poche dans un état où le poinçon de gaufrage (620) et un support d'ébauche (660) sont au contact l'un de l'autre.

4. Procédé de fabrication d'une cellule de batterie de type poche (100) selon la revendication 3,
la formation de la pièce gaufrée (400) comportant en outre le poinçonnage du film de poche par le poinçon de gaufrage (620), tandis que le support d'ébauche (660) appuie sur la surface inférieure au contact de la pièce gaufrée (400).

5. Procédé de fabrication d'une cellule de batterie de type poche (100) selon la revendication 4,
la surface inférieure de la partie gaufrée (400) étant formée pour être plate.

6. Procédé de fabrication d'une cellule de batterie de type poche (100) selon la revendication 1,
la partie gaufrée (400) étant formée lors du formage de la poche de la cellule de batterie de type poche (100).

7. Appareil de formation de poches pour former une partie réceptrice du film de la poche, l'appareil comprenant :
un poinçon de gaufrage (620),
une pièce de matrice (640) servant de passage par lequel le poinçon de gaufrage (620) se déplace ; et
un support d'ébauche (660) au contact du poinçon de gaufrage (620) dans la pièce de matrice (640),
le poinçon de gaufrage(620) formant une pièce gaufrée (400) avec une partie évidée (700) dans le film de poche, et
une forme circulaire extérieure (720) et une forme circulaire intérieure (740) de la partie gaufrée (400) étant formées par une partie évidée (700), et
la partie gaufrée (400) étant configurée pour être soumise à une étape de reconnaissance visuelle d'une forme circulaire intérieure (740) et d'une forme circulaire extérieure (720) d'après une pièce gaufrée évidée (700).

8. Appareil de formation de poches selon la revendication 7,
le support d'ébauche (660) appuyant sur une surface inférieure au contact de la partie gaufrée (400) de sorte que la surface inférieure de la partie gaufrée (400) soit plate.
